(19) Europäisches Patentamt / European Patent Office / Office européen des brevets

(11) **EP 3 812 427 A1**

(12) **EUROPEAN PATENT APPLICATION**
published in accordance with Art. 153(4) EPC


(43) Date of publication:
**28.04.2021 Bulletin 2021/17**

(21) Application number: **19825835.2**

(22) Date of filing: **09.05.2019**

(51) Int Cl.:
***C08L 75/14*** *(2006.01)* ***C08F 283/00*** *(2006.01)*
***C08G 18/00*** *(2006.01)* ***C08G 18/42*** *(2006.01)*
***C08G 18/48*** *(2006.01)* ***C08J 5/18*** *(2006.01)*
***C09D 109/00*** *(2006.01)* ***C09D 175/04*** *(2006.01)*

(86) International application number:
**PCT/JP2019/018511**

(87) International publication number:
**WO 2020/003754 (02.01.2020 Gazette 2020/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.06.2018 JP 2018119843**



(71) Applicant: **DIC Corporation**
**Tokyo 174-8520 (JP)**

(72) Inventors:
- **MIYAKE, Junichi**
**Takaishi-shi, Osaka 592-0001 (JP)**
- **YOSHIKAWA, Keigo**
**Ichihara-shi, Chiba 290-8585 (JP)**
- **NAGAHAMA, Sadamu**
**Takaishi-shi, Osaka 592-0001 (JP)**

(74) Representative: **Beckmann, Claus**
**Kraus & Weisert**
**Patentanwälte PartGmbB**
**Thomas-Wimmer-Ring 15**
**80539 München (DE)**


# (54) AQUEOUS RESIN COMPOSITION AND METHOD FOR PRODUCING SAME


(57) Provided is an aqueous resin composition that is capable of forming a film having excellent balance in solvent resistance, water resistance, flexibility, stretchability, and strength. An aqueous resin composition of the invention, contains: a composite resin (A); and an aqueous medium (B), in which the composite resin (A) has a polymer (A1) unit having a unit represented by Formula (1) and a polymer (A2) unit represented by Formula (3).

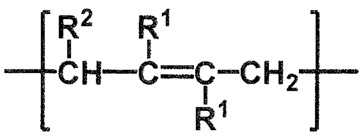

(1)

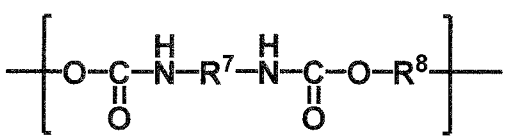

(3)

[$R^1$s each represent a hydrogen atom, a halogen atom, a phenyl group, or a methyl group. $R^2$ represents a hydrogen atom or a hydrocarbon group having 1 to 5 carbon atoms. $R^7$ represents a m1-valent hydrocarbon group having 1 to 20 carbon atoms. $R^8$ represents one type of $R^{10}[-L^1-(R^{11}-O-)_{n1}]_{n2}-$; $-O(-R^{11}-CO-O)_{n3}-$; $-O(-R^{11}-O-CO-R^{11}-CO-O)_{n4}-$; $-O(-R^{11}-O-CO-O)_{n5}-$; $-O(-R^{12})_{n6}-O-$; $-O-R^{11}-O-$, and a group obtained by combining such groups.]


EP 3 812 427 A1

## Description

### Technical Field

The present invention relates to an aqueous resin composition and a method for producing the same.

### Background Art

An aqueous resin composition has been used in various use applications such as paper coating and impregnation processing, fiber and non-woven fabric, a carpet, a civil engineering and construction material, mortar cement, automotive parts, a tire cord, a coating material, a paste, antirust coating, an adhesive agent, plastic modification, a powder puff, an electronic material, an adhesive agent (general), coating and impregnation (non-woven fabric and paper), fiber impregnation and fiber reinforcement processing (a carpet or the like), moisture-proof and water-resistant coating, cement and mortar, architectural material processing and wood adhesion, synthetic leather, artificial leather, gloves, and contraceptive appliances.

The aqueous resin composition has been required to have various properties, as usage, and an aqueous resin composition in which different resins are combined has been proposed. For example, in PTL 1, an aqueous resin containing a block copolymer including a vinyl polymer segment and a polyurethane segment having an acid group and/or an acid group neutralized with a basic compound is described. In addition, in PTL 2, a composition containing latex obtained by seed polymerization of a diene-based unsaturated monomer in the presence of seed latex, and aqueous polyurethane is described.

### Citation List

### Patent Literature

PTL 1: JP-A-6-199968
PTL 2: JP-A-2004-231852

### Summary of Invention

### Technical Problem

However, in the aqueous resin composition known from the related art, there was a case where it was difficult to make stretchability or flexibility and strength at the same time while maintaining solvent resistance and water resistance of a film to be obtained. An object of the invention is to provide an aqueous resin composition that is capable of forming a film in which balance in solvent resistance, water resistance, flexibility, stretchability, and strength of the film to be obtained is excellent, preferably, the stretchability or the flexibility and the strength in expansion and contraction are obtained at the same time while solvent resistance and water resistance are maintained.

### Solution to Problem

An aqueous resin composition of the invention contains: a composite resin (A); and an aqueous medium (B), in which the composite resin (A) has a polymer (A1) unit having a unit represented by Formula (1) and a polymer (A2) unit represented by Formula (3).

[Chem. 1]

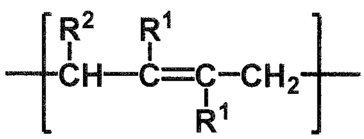

(1)

[In Formula (1), $R^1$ and $R^2$ will be described below.]

[Chem. 2]

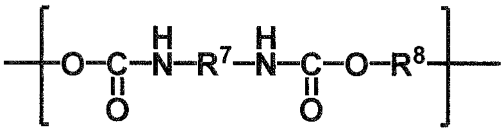

(3)

[In Formula (3), $R^7$ and $R^8$ will be described below.]

Advantageous Effects of Invention

By using the aqueous resin composition of the invention, balance in solvent resistance, water resistance, flexibility, stretchability, and strength of a film to be obtained can be excellent, preferably, the stretchability or the flexibility and the strength in expansion and contraction can be obtained at the same time while the solvent resistance and the water resistance are maintained.

Description of Embodiments

An aqueous resin composition of the invention contains: a composite resin (A) ; and an aqueous medium (B), in which the composite resin has a polymer (A1) unit and a polymer (A2) unit (here, the polymer (A1) unit is different from the polymer (A2) unit).

The polymer (A1) unit has a unit represented by Formula (1) (hereinafter, may be referred to as a "unit (1)").

[Chem. 3]

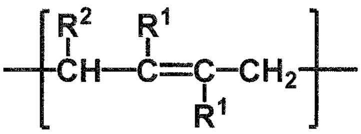

(1)

[In Formula (1),

$R^1$s each represent a hydrogen atom, a halogen atom, a phenyl group, or a methyl group, and two $R^1$s may be in a cis position or a trans position,
$R^2$ represents a hydrogen atom or a hydrocarbon group having 1 to 5 carbon atoms, and
here, a plurality of $R^1$s may be identical to each other or different from each other.]

$R^1$ is preferably a hydrogen atom, a halogen atom, a phenyl group, or a methyl group, and it is preferable that a combination of two $R^1$s in Formula (1) is a combination in which both of $R^1$s are a hydrogen atom, or a combination in which one of $R^1$s is a hydrogen atom and the other is a methyl group.

The hydrocarbon group represented by $R^2$ is preferably a straight-chain or branched-chain saturated hydrocarbon group, and is preferably a straight-chain saturated hydrocarbon group. The number of carbon atoms of the hydrocarbon group represented by $R^2$ is preferably 1 to 5, and is more preferably 1 to 3.

It is preferable that $R^2$ is a hydrogen atom.

A content ratio of the unit (1) in the polymer (A1) unit is preferably 0.1% by mass or more, is more preferably 1% by mass or more, and is even more preferably 5% by mass or more, and is preferably 100% by mass or less.

The polymer (A1) unit may have a unit represented by Formula (2) (hereinafter, may be referred to as a "unit (2) ") . In the polymer (A1) unit, the number of unit (1) and unit (2) and a bonding order thereof are arbitrary.

[Chem. 4]

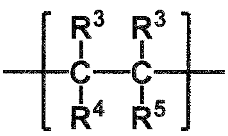

(2)

[In Formula (2),

$R^3$ represents a hydrogen atom or a methyl group,
$R^4$ represents a group selected from the group consisting of a hydrocarbon group having 1 to 20 carbon atoms, a heterocyclic group having 2 to 10 carbon atoms, a nitrile group, a hydroxyl group, a carboxy group, a sulfonic acid group, an isocyanate group, an alkoxysilyl group, a substituted or unsubstituted amino group, and a hydroxyalkyl group having carbon atoms 1 to 10, $-CH_2-$ in the hydrocarbon group or the hydroxyalkyl group represented by $R^4$ may be substituted with -CO-, -O-, or $-NR^6-$, and in a case where $-CH_2-$ in $R^4$ is substituted with $-NR^6-$, the remnant of $R^4$ and $R^6$ may form a ring,
$R^5$ represents a hydrogen atom or a hydrocarbon group having 1 to 20 carbon atoms, and $-CH_2-$ in the hydrocarbon group may be substituted with -CO- or -O-.
$R^4$ and $R^5$ may form a 3-membered to 7-membered hydrocarbon ring together with carbon atoms respectively bonded to $R^4$ and $R^5$, and $-CH_2-$ in the hydrocarbon ring may be substituted with -CO- or -O-.
$R^6$ represents a hydrogen atom or an alkyl group having 1 to 5 carbon atoms, and
here, in a case where two or more $R^3$s to $R^4$s and $R^6$s are present, $R^3$s to $R^4$s and $R^6$s may be identical to each other or different from each other.]

It is preferable that $R^3$ is a hydrogen atom.

Examples of the hydrocarbon group represented by $R^4$ and $R^5$ include a saturated or unsaturated aliphatic hydrocarbon group having 1 to 20 carbon atoms, a saturated or unsaturated alicyclic hydrocarbon group having 3 to 20 carbon atoms, an aromatic hydrocarbon group having 6 to 20 carbon atoms, and a composite hydrocarbon group having 4 to 20 carbon atoms that is obtained by combining such groups.

The hydrocarbon group represented by $R^4$ and $R^5$ may have a substituent, examples of the substituent include a halogen atom, a sulfonic acid group, a carboxy group, a quaternary ammonium group, a cyano group, an imide group, an alkoxy group, a heterocyclic group having 2 to 10 carbon atoms, a hydroxy group, an alkoxysilyl group (preferably, a trimethoxysilyl group, a triethoxysilyl group, and the like), and a substituted or unsubstituted amino group, and a carboxy group, an alkoxy group, a heterocyclic group having 2 to 10 carbon atoms, a hydroxy group, and an alkoxysilyl group are preferable.

Examples of the aliphatic hydrocarbon group include a straight-chain or branched-chain alkyl group and a straight-chain or branched-chain alkenyl group.

The number of carbon atoms of the aliphatic hydrocarbon group is preferably 2 to 8, and is more preferably 2 to 5.

Examples of the alicyclic hydrocarbon group include a monocyclic alicyclic hydrocarbon group; and a polycyclic (preferably, bridged dicyclic to tricyclic) alicyclic hydrocarbon group such as a tricyclo[5.2.1.0.2.6]decyl group, a bicyclo[4.3.0]-nonyl group, a tricyclo[5.3.1.1]dodecyl group, a propyl tricyclo[5.3.1.1]dodecyl group, a norbornyl group, a dicyclopentanyl group, a dicyclopentenyl group, and an adamantyl group, and the alicyclic hydrocarbon group may include an aliphatic hydrocarbon group having 1 to 5 carbon atoms that is bonded to a ring (preferably, an alkyl group having 1 to 5 carbon atoms).

The number of carbon atoms of the alicyclic hydrocarbon group is preferably 4 to 8, and is more preferably 5 to 7.

A heterocyclic group having 3 to 10 carbon atoms, a hydroxy group, an alkoxysilyl group, and the like are preferable as the substituent of the alicyclic hydrocarbon group.

Examples of the aromatic hydrocarbon group include a phenyl group, a toluyl group, a chlorophenyl group, a chlorotoluyl group, and a naphthyl group.

The number of carbon atoms of the aromatic hydrocarbon group is preferably 6 to 8.

Examples of the heterocyclic group and a heterocyclic group that the hydrocarbon group represented by $R^4$ and $R^5$ may have as a substituent include an epoxy group, a tetrahydrofurfuryl group, a morpholinyl group, and a pyridinyl group.

The number of carbon atoms of the heterocyclic group is preferably 2 to 8, and is more preferably 2 to 5.

Examples of the alkoxysilyl group represented by $R^4$ and an alkoxysilyl group that the hydrocarbon group represented by $R^4$ may have as a substituent include a trimethoxysilyl group and a triethoxysilyl group.

Examples of the amino group represented by $R^4$ and an amino group that the hydrocarbon group represented by $R^4$ may have as a substituent include an unsubstituted amino group; a monosubstituted amino group such as an N-methyl amino group, an N-ethyl amino group, an N-hydroxyethyl amino group, an N-methylol amino group, and an N-methoxyethyl amino group; and a disubstituted amino group such as an N,N-dimethyl amino group and an N,N-diethyl amino group.

Examples of the hydroxyalkyl group represented by $R^4$ include a hydroxyethyl group, a hydroxypropyl group, a hydroxybutyl group, and a glycerol group.

The number of carbon atoms of the hydroxyalkyl group represented by $R^4$ is preferably 2 to 8, and is more preferably 2 to 5.

As $R^4$, an aliphatic hydrocarbon group having 2 to 10 carbon atoms, an aromatic hydrocarbon group having 6 to 10 carbon atoms, a heterocyclic group having 3 to 10 carbon atoms, and a nitrile group.

Examples of the alkyl group represented by $R^6$ include a straight-chain or branched-chain alkyl group such as a methyl group, an ethyl group, and a propyl group.

The number of carbon atoms of the alkyl group represented by $R^6$ is preferably 1 to 3.

It is preferable that $R^6$ is a hydrogen atom.

In a case of having the unit (2), a content ratio of the unit (2) in the polymer (A1) unit is preferably 1% by mass or more, is more preferably 5% by mass or more, and is even more preferably 10% by mass or more, and is preferably 80% by mass or less, is more preferably 60% by mass or less, and is even more preferably 50% by mass or less.

The total content ratio of the unit (1) and the unit (2) in the polymer (A1) unit is preferably 70% by mass or more, is more preferably 80% by mass or more, and is even more preferably 90% by mass or more, and is preferably 100% by mass or less.

A content ratio of the polymer (A1) unit in the composite resin (A) is preferably 0.1% by mass or more, is more preferably 1% by mass or more, is even more preferably 10% by mass or more, and is particularly preferably 30% by mass or more, and is preferably 90% by mass or less, is more preferably 70% by mass or less, and is even more preferably 50% by mass or less.

The polymer (A2) unit has a unit represented by Formula (3) (hereinafter, may be referred to as a "unit (3)").

[Chem. 5]

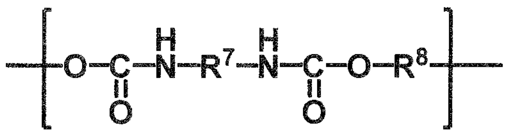

(3)

[In Formula (3),

$R^7$ represents a m1-valent hydrocarbon group having 1 to 20 carbon atoms, $-CH_2-$ in the hydrocarbon group may be substituted with -NCN-, and a hydrogen atom in the hydrocarbon group may be substituted with $-COOR^9$,

$R^9$ represents a hydrogen atom or an alkyl group having 1 to 5 carbon atoms,

$R^8$s each represent one type selected from the group consisting of $R^{10}[-L^1-(R^{11}-O-)_{n1}]_{n2}-$; $-O(-R^{11}-CO-O)_{n3}-$; $-O(-R^{11}-O-CO-R^{11}-CO-O)_{n4}-$; $-O(-R^{11}-O-CO-O)_{n5}-$; $-O(-R^{12})_{n6}-O-$; $-O-R^{11}-O-$; and a group obtained by combining two or more types of such groups from which -O- on a terminal is excluded, through -O-, and by adding -O- to a terminal,

$R^{10}$ represents a n2-valent hydrocarbon group having 1 to 20 carbon atoms, -N<, or -PO<, $-CH_2-$ in the hydrocarbon group may be substituted with -O-, -CO-, or -NH-, and a hydrogen atom in the hydrocarbon group may be substituted with a hydrophilic group,

$R^{11}$s each represent a hydrocarbon group having 1 to 20 carbon atoms, $-CH_2-$ in the hydrocarbon group may be substituted with -O-, and a hydrogen atom in the hydrocarbon group may be substituted with a hydrophilic group,

$R^{12}$ represents an alkenediyl group having 4 to 10 carbon atoms, and a hydrogen atom in the alkenediyl group may be substituted with a halogen atom or a hydrophilic group,

$L^1$s each represent one type selected from the group consisting of -O-, -S-, -NH-, -COO-, -OCO-, and $-R^{13}-O-$,

$R^{13}$ represents an alkylene group having 1 to 5 carbon atoms,

here, in a case where two or more $R^7$s to $R^{13}$s and $L^1$s are present, $R^7$s to $R^{13}$s and $L^1$s may be identical to each other or different from each other, and

m1 and n1 to n6 each represent an integer of 2 or more.]

Examples of the hydrocarbon group represented by $R^7$ and the hydrocarbon group represented by $R^{10}$ include a saturated or unsaturated aliphatic hydrocarbon group having 1 to 20 carbon atoms, a saturated or unsaturated alicyclic hydrocarbon group having 3 to 10 carbon atoms, an aromatic hydrocarbon group having carbon atoms 6 to 10, or a composite hydrocarbon group having 4 or more and 20 or less carbon atoms that is obtained by combining such groups.

Examples of the aliphatic hydrocarbon group include a group having m1-1 or n2-1 hydrogen atoms in the aliphatic hydrocarbon group represented by $R^4$, as a bond, and the aliphatic hydrocarbon group may be a straight-chain or branched-chain group.

The number of carbon atoms of the aliphatic hydrocarbon group is preferably 1 to 8, and is more preferably 1 to 5.

Examples of the alicyclic hydrocarbon group include a group having m1-1 or n2-1 hydrogen atoms in the alicyclic hydrocarbon group represented by $R^4$, as a bond, and the alicyclic hydrocarbon group may be monocyclic or polycyclic (preferably, bridged dicyclic to tricyclic) group.

The number of carbon atoms of the alicyclic hydrocarbon group is preferably 4 to 8, and is more preferably 5 to 7.

Examples of the aromatic hydrocarbon group include a group having m1-1 or n2-1 hydrogen atoms in the aromatic hydrocarbon group represented by $R^4$.

The number of carbon atoms of the aromatic hydrocarbon group is preferably 6 to 8.

Examples of the composite hydrocarbon group having 4 or more and 20 or less carbon atoms that is obtained by combining two or more types selected from the aliphatic hydrocarbon group, the alicyclic hydrocarbon group, and the aromatic hydrocarbon group include a diaryl alkanediyl group such as a diphenyl methanediyl group, a diphenyl ethanediyl group, and a diphenyl propanediyl group; a diaryl sulfonediyl group such as a diphenyl sulfonediyl group; and a dialkyl cycloalkanediyl group such as a 1,4-dimethyl cyclohexanediyl group.

The number of carbon atoms of the hydrocarbon group represented by $R^7$ and the hydrocarbon group represented by $R^{10}$ is preferably 6 to 18, and is more preferably 8 to 16.

The valence (m1 or n2) of the hydrocarbon group represented by $R^7$ and the hydrocarbon group represented by $R^{10}$ is preferably 2 or more, and is preferably 10 or less, is more preferably 6 or less, and is even more preferably 3 or less.

An alkyl group having 1 to 5 carbon atoms is preferable as $R^9$.

Examples of the hydrophilic group include an anionic group such as a carboxy group and a sulfonic acid group; and a cationic group such as a substituted or unsubstituted amino group.

Examples of the hydrocarbon group having 1 to 20 carbon atoms represented by $R^{11}$ include the same groups exemplified as the hydrocarbon group represented by $R^4$, and examples of a preferred group of the hydrocarbon group represented by $R^{11}$ also include the same groups exemplified as a preferred group of the hydrocarbon group represented by $R^4$.

The alkenediyl group represented by $R^{12}$ may be a straight-chain or branched-chain group, and the number of carbon atoms of the alkenediyl group is preferably 4 to 8, and is more preferably 4 to 6.

Examples of a halogen atom that may substitute a hydrogen atom in the alkenediyl group include a fluorine atom, a chlorine atom, a bromine atom, and an iodine atom, and a chlorine atom is preferable.

As $L^1$, one type selected from the group consisting of -O-, -NH-, -COO-, -OCO-, and $-R^{13}-O-$ is preferable, and one type selected from the group consisting of -O-, -NH-, -COO-, and $-R^{13}-O-$ is more preferable.

m1 is preferably 2 or more, and is preferably 10 or less, is more preferably 5 or less, and is even more preferably 3 or less.

n2 is preferably 2 or more, and is preferably 10 or less, is more preferably 5 or less, and is even more preferably 3 or less.

n3 to n6 are preferably 2 or more, and are preferably 1,000 or less, are more preferably 500 or less, and are even more preferably 100 or less, respectively.

As $R^8$, $R^{10}[-L^1-(R^{11}-O-)_{n1}]_{n2}-$; $-O-(R^{11}-CO-O-)_{n3}$; $-O-(R^{11}-O-CO-R^{11}-CO-O-)_{n4}$; $-O-(R^{11}-O-CO-O-)_{n5}-$; $-O-(R^{12})_{n6}-O-$, or $-O-R^{11}-O-$ is preferable, $R^{10}[-L^1-(R^{11}-O-)_{n1}]_{n2}-$; $-O-(R^{11}-CO-O-)_{n3}$; $-O-(R^{11}-O-CO-R^{11}-CO-O-)_{n4}$, or $-O-(R^{11}-O-CO-O-)_{n5}-$ is more preferable.

Furthermore, in the invention, a group obtained by excluding -O- on a terminal from $R^{10}[-L^1-(R^{11}-O-)_{n1}]_{n2}-$; $-O(-R^{11}-CO-O)_{n3}-$; $-O(-R^{11}-O-CO-R^{11}-CO-O)_{n4}-$; $-O(-R^{11}-O-CO-O)_{n5}-$; $-O(-R^{12})_{n6}-O-$; and $-O-R^{11}-O-$ may be referred to as an ether residue of such groups.

A content ratio of the unit (3) in the polymer (A2) unit is preferably 50% by mass or more, is more preferably 70% by mass or more, and is even more preferably 80% by mass or more, and is preferably 100% by mass or less.

The polymer (A2) unit may further have a unit represented by Formula (4) (hereinafter, may be referred to as a "unit (4)") and/or a unit represented by Formula (5) (hereinafter, may be referred to as a "unit (5)").

[Chem. 6]

$$-\!\left[L^2-R^{13}-L^2\right]\!- \qquad (4)$$

[In Formula (4),

$R^{13}$ represents a divalent or higher hydrocarbon group having 1 to 20 carbon atoms, and $-CH_2-$ in the hydrocarbon group may be substituted with -CO- or $-NR^{14}-$,
$R^{14}$ represents a hydrogen atom or a monovalent or higher chain saturated hydrocarbon group having 1 to 5 carbon atoms,
$L^2$ represents $-NR^6-$ or -O-, and

$R^6$ represents a hydrogen atom or an alkyl group having 1 to 5 carbon atoms.]

[Chem. 7]

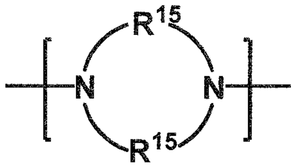

(5)

[In Formula (5),

$R^{15}$ represents a divalent hydrocarbon group having 1 to 20 carbon atoms, and $-CH_2-$ in the hydrocarbon group may be substituted with -CO- or $-NR^{14}-$, and
$R^{14}$ is as described above.]

Each hydrocarbon group having 1 to 20 carbon atoms represented by $R^{13}$ or $R^{15}$ is a divalent or higher or divalent group, examples thereof include a saturated or unsaturated aliphatic hydrocarbon group having 1 to 20 carbon atoms, a saturated or unsaturated alicyclic hydrocarbon group having 3 to 10 carbon atoms, an aromatic hydrocarbon group having carbon atoms 6 to 10, and a composite hydrocarbon group having 4 or more and 20 or less carbon atoms that is obtained by combining such groups, and an aliphatic hydrocarbon group, an alicyclic hydrocarbon group, or a composite hydrocarbon group is preferable.
Examples of the aliphatic hydrocarbon group include a group having m1-1 or n1-1 hydrogen atoms in the aliphatic hydrocarbon group represented by $R^4$, as a bond, and the aliphatic hydrocarbon group may be a straight-chain or branched-chain group.
The number of carbon atoms of the aliphatic hydrocarbon group is preferably 1 to 8, and is more preferably 1 to 5.
Examples of the alicyclic hydrocarbon group include a group having one or more (preferably, one) hydrogen atoms in the alicyclic hydrocarbon group represented by $R^4$, as a bond, and the alicyclic hydrocarbon group may be a monocyclic or polycyclic (preferably, bridged dicyclic to tricyclic) group.
The number of carbon atoms of the alicyclic hydrocarbon group is preferably 4 to 8, and is more preferably 5 to 7.
Examples of the aromatic hydrocarbon group include a group having m1-1 or n1-1 hydrogen atoms in the aromatic hydrocarbon group represented by $R^4$, as a bond.
The number of carbon atoms of the aromatic hydrocarbon group is preferably 6 to 8.
Examples of the composite hydrocarbon group having 4 or more and 20 or less carbon atoms that is obtained by combining two or more types selected from the aliphatic hydrocarbon group, the alicyclic hydrocarbon group, and the aromatic hydrocarbon group include a diaryl alkanediyl group such as a diphenyl methanediyl group, a diphenyl ethanediyl group, and a diphenyl propanediyl group; a diaryl sulfonediyl group such as a diphenyl sulfonediyl group; and a dialkyl cycloalkanediyl group such as a 1,4-dimethyl cyclohexanediyl group.
The number of carbon atoms of the hydrocarbon group represented by $R^{13}$ or $R^{15}$ is preferably 2 to 18, and is more preferably 2 to 16.
The valence of the hydrocarbon group represented by $R^{13}$ is preferably 2.
$R^{14}$ is preferably a hydrogen atom.
$-NR^6-$ is preferable as $L^2$.
The total content ratio of the unit (4)and/or the unit (5) in the polymer (A2) unit is preferably 0.1% by mass or more, is more preferably 3% by mass or more, and is even more preferably 5% by mass or more, and is preferably 50% by mass or less, is more preferably 30% by mass or less, and is even more preferably 20% by mass or less.
In a case where the polymer (A2) unit has an anionic group, the aqueous resin composition may contain a basic compound. Examples of the basic compound include organic amine such as ammonia, triethyl amine, morpholine, monoethanol amine, and diethyl ethanol amine; and a metal hydroxide including sodium hydroxide, potassium hydroxide, and lithium hydroxide, and the like. A molar ratio of the basic compound to the anionic group (Basic Group/Anionic Group) is preferably 0.5 or more and 3.0 or less, and is more preferably 0.8 or more and 2.0 or less, from the viewpoint of improving water dispersion stability of the aqueous resin composition.
In a case where the polymer (A2) unit has an anionic group, an acid number of the polymer (A2) unit is preferably 0.1 mgKOH/g or more, is more preferably 5 mgKOH/g or more, and is even more preferably 10 mgKOH/g or more, and is preferably 100 mgKOH/g or less, is more preferably 70 mgKOH/g or less, and is even more preferably 50 mgKOH/g or less.
Herein, the acid number is a theoretical value that is calculated as the milligram of potassium hydroxide necessary for neutralizing 1 g of the polymer (A2) by calculating the amount of anionic group in the polymer (A2), on the basis of a raw material composition.

In a case where the polymer (A2) unit has a cationic group, the aqueous resin composition may contain a carboxylic acid such as a formic acid, an acetic acid, a propionic acid, a succinic acid, a glutaric acid, and an adipic acid; a hydroxy acid such as a tartaric acid; and an acidic compound such as a phosphoric acid, a part or all of tertiary amino groups as the cationic group may be quaternized with a quaternization agent such as dimethyl sulfate, diethyl sulfate, methyl chloride, ethyl chloride.

In a case where the polymer (A2) unit has a cationic group, an amine number of the polymer (A2) unit is preferably 2 mgKOH/g or more and 50 mgKOH/g or less, and is more preferably 5 mgKOH/g or more and 30 mgKOH/g or less.

Herein, the amine number is a theoretical value that is calculated as the sum of a molar number (mmol) of hydrogen chloride and formula weight (56.1 g/mol) of potassium hydroxide necessary for neutralizing 1 g of the polymer (A2) by calculating the amount of cationic group in the polymer (A2), on the basis of a raw material composition.

The weight average molecular weight of the polymer (A2) is preferably 3,000 or more, is more preferably 10,000 or more, and is even more preferably 30,000 or more, and is preferably 1,000,000 or less, is more preferably 500,000 or less, and is even more preferably 300,000 or less.

Herein, a weight average molecular weight and a number average molecular weight can be measured by a gel permeation chromatography (GPC) with polystyrene as a reference sample, unless otherwise specified.

The content of the polymer (A2) unit is preferably 0.1 parts by mass or more, is more preferably 0.5 parts by mass or more, and is even more preferably 1 part by mass or more, and is preferably 100 parts by mass or less, is more preferably 10 parts by mass or less, and is even more preferably 3 parts by mass or less, with respect to 1 part by mass of the polymer (A1) unit.

The total content ratio of the polymer (A1) unit and the polymer (A2) unit in the composite resin (A) is preferably 70% by mass or more, is more preferably 80% by mass or more, and is even more preferably 90% by mass or more, and the upper limit is 100% by mass.

In the composite resin (A), it is preferable that at least a part of the surface of the polymer (A1) unit is covered with the polymer (A2) unit, and is preferable that a layer of the polymer (A2) unit is formed on the surface of the polymer (A1) unit. The polymer (A1) unit and the polymer (A2) unit may be or may not be chemically bonded to each other.

A gel fraction of the composite resin (A) is preferably 0.01% by mass or more, is more preferably 1% by mass or more, is even more preferably 3% by mass or more, and is still even more preferably 10% by mass or more, and the upper limit is 100% by mass, and for example, the upper limit of 90% by mass or less, and the upper limit of 80% by mass or less are also allowed.

The gel fraction of the composite resin (A), for example, can be measured by the following method. First, the aqueous resin composition of the invention is applied onto a glass plate such that a film thickness after drying is 0.5 mm, is dried at 80°C for 2 hours, and then, is peeled off from the glass plate, and is dried at 140°C for 5 minutes, and is cut into the shape of a circle having a diameter of 29 mm, as a sample. The weight of the sample before being immersed in a solvent is measured as G1. Next, a solvent-insoluble content of the sample after being immersed in toluene at a normal temperature for 24 hours is separated by filtration with 80 mesh wire, the sample is dried at 110°C for 1 hour, and then, is weighed as G2. A value obtained on the basis of the following expression is set to the gel fraction.

$$\text{Gel Fraction (\% by mass)} = (G2/G1) \times 100$$

It is preferable that the composite resin (A) is dispersed in the aqueous medium (B). A dispersion state of the composite resin (A), for example, can be checked by the presence or absence of a precipitate in the aqueous resin composition.

A content ratio of the composite resin (A) in the aqueous resin composition is preferably 10% by mass or more, is more preferably 20% by mass or more, and is even more preferably 30% by mass or more, and is preferably 70% by mass or less, is more preferably 60% by mass or less, and is even more preferably 50% by mass or less.

Examples of the aqueous medium (B) include water, an organic solvent that is mixed with water, and a mixture thereof . One type or two or more types of organic solvents can be used as the organic solvent that is mixed with water, and examples thereof are capable of including an alcohol solvent such as methanol, ethanol, n-propanol, isopropyl alcohol, 1,2-propylene glycol, and 1,3-butylene glycol; a ketone solvent such as acetone and methyl ethyl ketone; a glycol ether solvent such as ethylene glycol-n-butyl ether, diethylene glycol-n-butyl ether, diethylene glycol monoethyl ether acetate, diethylene glycol dimethyl ether, propylene glycol methyl ether, dipropylene glycol methyl ether, dipropylene glycol dimethyl ether, dipropylene glycol-n-butyl ether, and tripropylene glycol methyl ether; a lactam solvent such as N-methyl-2-pyrrolidone and N-ethyl-2-pyrrolidone; and an amide solvent such as N,N-dimethyl formamide, and an alcohol solvent is preferable.

In consideration of safety or a reduction in the load on the environment, water alone, or a mixture of water and the organic solvent that is mixed with water is preferable, and water alone is more preferable, as the aqueous medium (B). A content ratio of water in 100% by mass of the aqueous medium (B) is preferably 50% by mass or more, is more preferably 60% by mass or more, and is even more preferably 70% by mass or more.

A content ratio of the aqueous medium (B) in the total amount 100% by mass of the aqueous resin composition is preferably 30% by mass or more and 80% by mass or less, and is more preferably 50% by mass or more and 70% by mass or less.

The aqueous resin composition of the invention may further contain various additives (C) such as a cross-linking agent, an interfacial active agent, a plasticizing agent, an antistatic agent, wax, a light stabilizer, a fluidity adjuster, a colorant, a leveling agent, a rheology control agent, an ultraviolet absorbing agent, an oxidant inhibitor, a photocatalytic compound, an inorganic pigment, an organic pigment, an extender pigment, a curing agent, a curing catalyst, an emulsifying agent, and a dispersion stabilizer .

The content of the additive (C) is preferably 20 parts by mass or less, is more preferably 10 parts by mass or less, and is even more preferably 1 part by mass or less, with respect to 100 parts by mass of the composite resin (A).

The composite resin (A) can be produced by polymerizing a vinyl compound in the presence of the polymer (A2). In addition, the aqueous resin composition of the invention can be produced by performing the polymerization reaction in the aqueous medium (B). The vinyl compound contains a compound (11), and thus, at least a part of the vinyl compound is incorporated into the polymer (A2) in the aqueous medium (B), and in such a state, a polymerization reaction is performed, and thus, the composite resin (A) of the invention can be produced. The additives (C) may be present together in the polymerization reaction, as necessary, or the additives (C) may be added after the polymerization reaction.

The vinyl compound contains a compound represented by Formula (11) (hereinafter, may be referred to as a "compound (11) ") .

[Chem. 8]

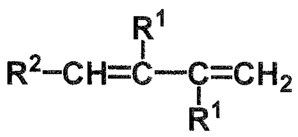

(11)

[In Formula (11), $R^1$ and $R^2$ are as described above.]

One type or two or more types of compounds can be used as the compound (11), and examples thereof include 1,3-butadiene, isoprene, 2,3-dimethyl-1,3-butadiene, 1,3-pentadiene, 1,3-hexadiene, 1,3-heptadiene, 2,3-dimethyl butadiene, 2-phenyl-1,3-butadiene, 3-methyl-1,3-pentadiene, and 2-chlor-1,3-butadiene.

The vinyl compound may contain a compound represented by Formula (12) (hereinafter, may be referred to as a "compound (12) ") .

[Chem. 9]

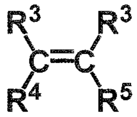

(12)

[In Formula (12), $R^3$ to $R^5$ are each as described above, and two $R^3$s may be in a cis position or a trans position.]

One type or two or more types of compounds can be used as the compound (12), and examples thereof include alkyl (meth)acrylate having 4 to 22 carbon atoms such as methyl (meth)acrylate, ethyl (meth)acrylate, propyl (meth)acrylate, butyl (meth)acrylate, isobutyl (meth)acrylate, tert-butyl (meth)acrylate, pentyl (meth)acrylate, 3-methyl butyl (meth)acrylate, neopentyl (meth)acrylate, isoamyl (meth)acrylate, hexyl (meth)acrylate, heptyl (meth)acrylate, octyl (meth)acrylate, 2-ethyl hexyl (meth)acrylate, isooctyl (meth)acrylate, nonyl (meth)acrylate, dodecyl (meth)acrylate, tridecyl (meth)acrylate, stearyl (meth)acrylate, isostearyl (meth)acrylate, and hexadecyl (meth)acrylate;

cycloalkyl (meth)acrylate having 6 to 20 carbon atoms such as cyclopentyl (meth)acrylate, cyclohexyl (meth)acrylate, and isobornyl (meth)acrylate;

allyl (meth)acrylate such as phenyl (meth)acrylate;

aralkyl (meth) acrylate 10 to 20 having carbon atoms such as benzyl (meth)acrylate and phenethyl (meth)acrylate;

allyloxyalkyl (meth)acrylate such as phenoxyethyl (meth)acrylate;

crotonic acid alkyl ester such as methyl crotonate and ethyl crotonate;

unsaturated dicarboxylic acid alkyl ester such as dimethyl malate, dibutyl malate, dimethyl fumarate, dibutyl fumarate, dimethyl itaconate, and dibutyl itaconate;

an aromatic vinyl monomer such as styrene, p-tert-butyl styrene, $\alpha$-methyl styrene, vinyl toluene, vinyl pyridine, chlorostyrene, and chloromethyl styrene;

a nitrogen atom-containing monomer such as (meth)acrylonitrile, crotononitrile, (meth)acrylamide, N-methyl (meth)acrylamide, N-isopropyl (meth)acrylamide, N-hydroxyethyl (meth)acrylamide, N-methylol (meth)acrylamide, N-methoxyethyl (meth)acrylamide, N,N-dimethyl (meth)acrylamide, N,N-diethyl (meth)acrylamide, N,N-dimethyl aminoethyl (meth)acrylate, N,N-dimethyl aminopropyl (meth)acrylamide, N,N-diethyl aminoethyl (meth)acrylate, N,N-diethyl aminopropyl (meth)acrylate, N-(meth)acryloyl morpholine, N-(meth)acryloyl pyrrolidine, N-vinyl formamide, N-vinyl pyrrolidone, N-vinyl imidazole, N-vinyl carbazole, N-vinyl quinoline, and N-vinyl piperidine (preferably, monosubstituted or disubstituted (meth)acrylamide (including (meth)acrylamide in which substituents are bonded to form a ring)), and a methyl chloride salt of the nitrogen atom-containing monomer;

halogenated olefin such as vinyl fluoride, vinylidene fluoride, tetrafluoroethylene, chlorotrifluoroethylene, hexafluoropropylene, vinyl chloride, and vinylidene chloride; and $\alpha$-olefin such as ethylene, propylene, isobutylene, and 1-butene;

carboxylic acid vinyl ester such as vinyl acetate, vinyl propionate, vinyl pivalate, vinyl versatate, vinyl benzoate, and vinyl neodecanoate;

alkyl vinyl ether such as methyl vinyl ether, ethyl vinyl ether, n-butyl vinyl ether, and isobutyl vinyl ether; and cycloalkyl vinyl ether such as cyclohexyl vinyl ether;

a carbonyl group-containing monomer such as acrolein and methyl vinyl ketone;

a polyoxyethylene group-containing (meth)acrylic monomer such as polyethylene glycol (meth)acrylate, methoxypolyethylene glycol (meth)acrylate, polyethylene glycol polypropylene glycol copolymerize (meth)acrylate, methoxypolyethylene glycol polypropylene glycol copolymerize (meth)acrylate, polyethylene glycol polytetramethylene glycol copolymerize (meth)acrylate, and methoxypolyethylene glycol polytetramethylene glycol copolymerize (meth)acrylate;

a fluoroalkyl group-containing monomer such as perfluorocyclohexyl (meth)acrylate, di-perfluorocyclohexyl fumarate, and N-isopropyl fluorooctane sulfonic acid amide ethyl (meth)acrylate;

anhydrides of unsaturated dicarboxylic acids such as a maleic anhydride, a citraconic anhydride, a mesaconic anhydride, an itaconic anhydride, and a tetrahydrophthalic anhydride;

a cyclic ether-containing monomer such as glycidyl (meth)acrylate, allyl glycidyl ether, and tetrahydrofurfuryl (meth)acrylate;

a silyl group-containing monomer such as vinyl trichlorosilane, vinyl triethoxysilane, vinyl tris($\beta$-methoxyethoxy)silane, and $\gamma$-(meth)acryloxypropyl trimethoxysilane;

a hydroxy group-containing monomer such as 2-hydroxyethyl (meth)acrylate, 2-hydroxypropyl (meth)acrylate, 2-hydroxybutyl (meth)acrylate, 4-hydroxybutyl (meth)acrylate, 2-hydroxyethyl vinyl ether, 4-hydroxybutyl vinyl ether, and 2-hydroxyethyl allyl ether; and

a vinyl group-containing sulfonic acid compound such as a vinyl sulfonic acid, a 3-acryloxypropane-1-sulfonic acid, a 3-acryloxyoctyl oxybenzene sulfonic acid, a 3-acryloxybenzene diazosulfonic acid, a 3-acryloxyazobenzene-4'-sulfonic acid, a 2-acryloyl amino-2-methyl propane-1-sulfonic acid, a 2-acryloyl amide-2-methyl propane sulfonic acid, and an acrylonitrile-tert-butyl sulfonic acid, and a salt thereof.

When the vinyl compound is polymerized, it is preferable that a radical polymerization initiator is coexistent. A photopolymerization initiator and a thermal polymerization initiator can be used as the polymerization initiator. Examples of the photopolymerization initiator include benzophenone, benzyl, Michler's ketone, thioxanthone, anthraquinone, benzoin, dialkoxyacetophenone, acyl oxime ester, benzyl ketal, hydroxyalkyl phenone, and halogenoketone. The photopolymerization initiator may be used by being combined with tertiary amine such as methyl amine, diethanol amine, N-methyl diethanol amine, and tributyl amine, as necessary. A thermal polymerization initiator such as an azo compound such as 2,2'-azobis(isobutyronitrile), 2,2'-azobis(2-methyl butyronitrile), a 2,2'-azobis(2-methyl propione amidine) dihydrochloride, a 4,4'-azobis(4-cyano)valeric acid, and 2,2'-azobis(2-amidinopropane) dihydrochloride; an organic peroxide such as such as benzoyl peroxide, tert-butyl hydroperoxide, tert-butyl peroxypivalate, tert-butyl peroxybenzoate, tert-butyl peroxy-2-ethyl hexanoate, di-tert-butyl peroxide, di-tert-butyl hydroperoxide, cumene hydroperoxide, benzoyl peroxide, lauroyl peroxide, decanoyl peroxide, tert-butyl cumyl peroxide, dicumyl peroxide, tert-butyl peroxylaurate, tert-butyl peroxybenzoate, cumene hydroperoxide, and paramenthane hydroperoxide; and an inorganic peroxide such as hydrogen peroxide, ammonium persulfate, potassium persulfate, and sodium persulfate can be used as the thermal

polymerization initiator.

The amount of radical polymerization initiator is preferably 0.01 parts by mass or more, is more preferably 0.1 parts by mass or more, and is even more preferably 0.5 parts by mass or more, and is preferably 20 parts by mass or less, is more preferably 10 parts by mass or less, and is even more preferably 5 parts by mass or less, with respect to a total of 100 parts by mass of the vinyl compound.

It is preferable that the polymer (A2) is provided in the polymerization of the vinyl compound in a state of being dispersed in the aqueous medium (B) . A preliminary dispersion liquid in which the polymer (A2) is dispersed in the aqueous medium (B), for example, can be produced by a reaction between a compound represented by Formula (13) (hereinafter, may be referred to as a "compound (13)") and a compound represented by Formula (14) (hereinafter, may be referred to as a "compound (14)"), and as necessary, by a further reaction between a compound represented by Formula (15) (hereinafter, may be referred to as a "compound (15)") and/or a compound represented by Formula (16) (hereinafter, may be referred to as a "compound (16)"), in the absence of a solvent or in the presence of an organic solvent.

From the viewpoint of safety or a reduction in the load on the environment, the organic solvent may be partially or entirely removed by vacuum distillation or the like while the polymer (A2) is produced or after the polymer (A2) is produced.

[Chem. 10]

$$R^7\text{-}(NCO)_{m1} \qquad (13)$$

[In Formula (13), $R^7$ and m1 are as described above.]

[Chem. 11]

$$R^8\text{-}(OH)_{n7} \qquad (14)$$

[In Formula (14), $R^8$ is as described above, and n7 represents an integer of 2 or more.]

[Chem. 12]

$$R^{13}\text{-}(L^2\text{-}H)_{n8} \qquad (15)$$

[In Formula (15), $R^{13}$ and $L^2$ are as described above, and n8 represents an integer of 2 or more.]

[Chem. 13]

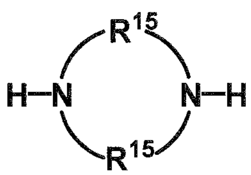

(16)

[In Formula (16), $R^{15}$ is as described above.]

Examples of the compound (13) include polyether polyol, polyester polyol, polycarbonate polyol, and polyolefin polyol, it is preferable that the compound (13) contains polymer polyol such as polyester polyol and polycarbonate polyol (having a number average molecular weight of 500 or more, preferably 3,000 or less), and as necessary, the compound (13) may contain polyol having a hydrophilic group and low-molecular-weight polyol (having a number average molecular weight of less than 500, preferably 50 or more).

Examples of the polyether polyol include polyether polyol obtained by additional polymerization (ring-opening polymerization) of alkylene oxide using one type or two or more types of compounds having two or more active hydrogen atoms as an initiator.

Examples of the initiator include straight-chain diol such as ethylene glycol, diethylene glycol, triethylene glycol, trimethylene glycol, 1,2-propanediol, 1,3-propanediol, 1,3-butanediol, 1,4-butanediol, and 1,6-hexanediol; branched-chain diol such as neopentyl glycol; triol such as glycerin, trimethylol ethane, trimethylol propane, and pyrogallol; polyol such as sorbitol, saccharose, and aconitic sugar; a tricarboxylic acid such as an aconitic acid, a trimellitic acid, and a hemimellitic acid; a phosphoric acid; polyamine such as ethylene diamine and diethylene triamine; triisopropanol amine; a phenolic acid such as a dihydroxybenzoic acid and a hydroxyphthalic acid ; and 1,2,3-propane trithiol.

Examples of the alkylene oxide include ethylene oxide, propylene oxide, butylene oxide, styrene oxide, epichlorohydrin, and tetrahydrofuran.

It is preferable that polyoxytetramethylene glycol obtained by additional polymerization (ring-opening polymerization) of tetrahydrofuran with the initiator is used as the polyether polyol.

Examples of the polyester polyol include polyester polyol obtained by an esterification reaction between low-molecular-weight polyol (For example, polyol having a molecular weight of 50 or more 300 or less) and a polycarboxylic acid; polyester polyol obtained by a ring-opening polymerization reaction of a cyclic ester compound such as ε-caprolactone; and copolymerized polyester polyol thereof.

Polyol having a molecular weight of approximately 50 or more and 300 or less can be used as the low-molecular-weight polyol, and examples thereof include aliphatic polyol having 2 or more and 6 or less carbon atoms such as ethylene glycol, propylene glycol, 1,4-butanediol, 1,5-pentanediol, 1,6-hexanediol, 3-methyl-1,5-pentanediol, diethylene glycol, dipropylene glycol, neopentyl glycol, and 1,3-butanediol; polyol having an alicyclic structure such as 1,4-cyclohexanediol and cyclohexane dimethanol; polyol having an aromatic structure such as a bisphenol compound such as bisphenol A and bisphenol F, and an alkylene oxide adduct thereof.

Examples of the polycarboxylic acid include an aliphatic polycarboxylic acid such as a succinic acid, an adipic acid, a sebacic acid, and a dodecane dicarboxylic acid; an aromatic polycarboxylic acid such as a terephthalic acid, an isophthalic acid, a phthalic acid, and a naphthalene dicarboxylic acid; and an anhydride or an ester-forming derivative of the aliphatic polycarboxylic acid and the aromatic polycarboxylic acid.

Examples of the polycarbonate polyol include a reactant of carbonic acid ester and polyol; and a reactant of phosgene and bisphenol A or the like.

Examples of the carbonic acid ester include methyl carbonate, dimethyl carbonate, ethyl carbonate, diethyl carbonate, cyclocarbonate, and diphenyl carbonate.

Examples of polyol that can be reacted with the carbonic acid ester include polyols exemplified as the low-molecular-weight polyol; and high-molecular-weight polyol (having a weight average molecular weight of 500 or more 5,000 or less) such as polyether polyol (polyethylene glycol, polypropylene glycol, and the like), and polyester polyol (polyhexamethylene adipate and the like).

Examples of the polyolefin polyol include polyisobutene polyol, hydrogenerated polybutadiene polyol, and hydrogenerated polyisoprene polyol.

The total content ratio of the polymer polyol contained in the compound (13) (preferably, polyether polyol, polyester polyol, polycarbonate polyol, and polyolefin polyol) in the compound (13) is preferably 30% by mass or more, and is more preferably 40% by mass or more, and is preferably 100% by mass or less.

Examples of the hydrophilic group include an anionic group, a cationic group, and a nonionic group, and water dispersibility of the composite resin (A) can be improved by using polyol having a hydrophilic group. Polyol other than the polyether polyol, the polyester polyol, the polycarbonate polyol, and the polyolefin polyol can be used as the polyol having a hydrophilic group, and specifically, polyol having an anionic group, polyol having a cationic group, and polyol having a nonionic group can be used. Among them, it is preferable to use polyol having an anionic group or polyol having a cationic group.

Examples of the polyol having an anionic group include polyol having a carboxy group and polyol having a sulfonic acid group.

Examples of the polyol having a carboxy group include a hydroxy acid such as a 2,2-dimethylol propionic acid, a 2,2-dimethylol butanoic acid, a 2,2-dimethylol butyric acid, and a 2,2-dimethylol valeric acid; and a reactant of the polyol having a carboxy group and the polycarboxylic acid. A 2,2-dimethylol propionic acid is preferable as the hydroxy acid.

Examples of the polyol having a sulfonic acid group include a dicarboxylic acid a sulfonic acid group such as a 5-sulfoisophthalic acid, a sulfoterephthalic acid, a 4-sulfophthalic acid, and a 5-(4-sulfophenoxy)isophthalic acid; and polyester polyol obtained by a reaction between a salt of the dicarboxylic acid and the polyol having an aromatic structure.

Examples of the polyol having a cationic group include N-methyl-diethanol amine; and polyol having a tertiary amino group such as polyol obtained by a reaction between a compound having two epoxies in one molecule and secondary amine.

Examples of the polyol having a nonionic group include polyol having a polyoxyethylene structure.

In a case where the compound (13) contains polyol having a hydrophilic group, the content thereof in a total of 100 parts by mass of the compound (13) is preferably 0.3 parts by mass or more, is more preferably 1 part by mass or more, is even more preferably 2% by mass or more, and is particularly preferably 5% by mass or more, and is preferably 30 parts by mass or less, is more preferably 20 parts by mass or less, and is even more preferably 10 parts by mass or less.

Examples of the low-molecular-weight polyol include alkanediol such as ethylene glycol, diethylene glycol, 1,2-propylene glycol, dipropylene glycol, neopentyl glycol, 2-butyl-2-ethyl-1,3-propanediol, 1,4-butanediol, 1,5-pentanediol, 3-methyl-1,5-pentanediol, 1,4-cyclohexanediol, 1,6-hexanediol; and cycloalkane dialkanol such as cyclohexane dimethanol.

One type or two or more types of compounds can be used as the compound (14), and examples thereof include aromatic polyisocyanate such as 4,4'-diphenyl methane diisocyanate, 2,4'-diphenyl methane diisocyanate, carbodiimide-modified diphenyl methane diisocyanate, crude diphenyl methane diisocyanate, phenylene diisocyanate, triene diisocyanate, naphthalene diisocyanate, xylylene diisocyanate, and tetramethyl xylylene diisocyanate; aliphatic polyisocyanate such as hexamethylene diisocyanate and lysine diisocyanate; and polyisocyanate having an alicyclic structure such as cyclohexane diisocyanate, hydrogenerated xylylene diisocyanate, isophorone diisocyanate, and dicyclohexyl methane diisocyanate.

A molar ratio (NCO/OH) of -NCO in the compound (13) to -OH in the compound (14) is preferably 0.3 or more, is more preferably 0.5 or more, and is even more preferably 0.8 or more, is preferably 5.0 or less, is more preferably 3.0 or less, and is even more preferably 2.0 or less.

One type or two or more types of compounds can be used as the compound (15), and examples thereof include diamine such as ethylene diamine, 1,2-propane diamine, 1,6-hexamethylene diamine, isophorone diamine, 4,4'-dicyclohexyl methane diamine, 3,3'-dimethyl-4,4'-dicyclohexyl methane diamine, and 1,4-cyclohexane diamine; N-hydroxymethyl aminoethyl amine, N-hydroxyethyl aminoethyl amine, N-hydroxypropyl aminopropyl amine, N-ethyl aminoethyl amine, and N-methyl aminopropyl amine; polyamine such as diethylene triamine, dipropylene triamine, and triethylene tetramine; hydrazine, N,N'-dimethyl hydrazine, and 1,6-hexamethylene bishydrazine; succinic acid dihydrazide, adipic acid dihydrazide, glutaric acid dihydrazide, sebacic acid dihydrazide, and isophthalic acid dihydrazide; a hydrazine compound such as β-semicarbazide propionic acid dihydrazide; glycol such as ethylene glycol, diethylene glycol, triethylene glycol, propylene glycol, 1,3-propanediol, 1,3-butanediol, 1,4-butanediol, hexamethylene glycol, saccharose, methylene glycol, glycerin, and sorbitol; phenol such as bisphenol A, 4,4'-dihydroxydiphenyl, 4,4'-dihydroxydiphenyl ether, 4,4'-dihydroxydiphenyl sulfone, hydrogenerated bisphenol A, and hydroquinone, and water.

One type or two or more types of compounds can be used as the compound (16), and examples thereof include piperazine and 2,5-dimethyl piperazine.

The aqueous resin composition of the invention is capable of making balance solvent resistance, water resistance, flexibility, stretchability, and strength of a film to be formed excellent, and is preferably capable of having the stretchability or the flexibility and the strength at the same time while maintaining the solvent resistance and the water resistance, and thus, is suitable for paper coating and impregnation processing, fiber and non-woven fabric, a carpet, a civil engineering and construction material, mortar cement, automotive parts, a tire cord, a coating material, a paste, antirust coating, an adhesive agent, plastic modification, a powder puff, an electronic material, an adhesive agent (general), coating and impregnation (non-woven fabric and paper), fiber impregnation and fiber reinforcement processing (a carpet or the like), moisture-proof and water resistant coating, cement and mortar, architectural material processing and wood adhesion, synthetic leather, artificial leather, gloves, contraceptive appliances, and the like.

## Examples

Hereinafter, the invention will be described in more detail with reference to examples.

### (Synthesis Example 1: Synthesis of Polyester Polyol (1))

27.6 parts by mass of an isophthalic acid, 27.6 parts by mass of a terephthalic acid, 11.7 parts by mass of ethylene glycol, 19.9 parts by mass of diethylene glycol, and 0.03 parts by mass of dibutyl tin oxide were put in a reaction vessel provided with a thermometer, a nitrogen gas introduction pipe, and a stirrer while nitrogen gas was introduced into the reaction vessel, and a polycondensation reaction was performed at 230°C for 24 hours until an acid number was 1 or less at 180 to 230°C, and thus, polyester polyol (1) was obtained.

### (Synthesis Example 2: Synthesis of Polymer (A2-1))

A reaction was performed in a mixed solvent of 233 parts by mass of polyoxytetramethylene glycol (a molecular weight of 2000), 96 parts by mass of isophorone diisocyanate, 18 parts by mass of a 2,2-dimethylol propionic acid, 7.1 parts by mass of neopentyl glycol, and 178 parts by mass of methyl ethyl ketone, in a nitrogen-substituted vessel provided with a thermometer, a nitrogen gas introduction pipe, and a stirrer, and thus, an organic solvent solution of a prepolymer having an isocyanate group on a molecular terminal was obtained.

Next, a part or all of the carboxyl groups in the prepolymer were neutralized by adding 18 parts by mass of triethyl amine, and 720 parts by mass of water and 6.2 parts by mass of a hydrazine aqueous solution of 80% were further added and sufficiently stirred, and thus, a water dispersion element of a polymer (A2-1) was obtained, and then, aging and desolvation was performed, and therefore, a polymer composition (I-1) having a non-volatile content of 35% by mass, containing the polymer (A2-1), was obtained.

(Synthesis Example 3: Synthesis of Polymer (A2-2))

In a reaction vessel, 75.7 parts by mass of the polyester polyol (1) of Synthesis Example 1 was dehydrated at 100°C under reduced pressure, and then, was cooled to 80°C, and after that, 67.89 parts by mass of methyl ethyl ketone was added and stirred to be homogeneously mixed. Next, 6.1 parts by mass of a 2,2-dimethylol propionic acid was added, and then, 20.3 parts by mass of isophorone diisocyanate was added, and a reaction was performed at 80°C for 12 hours. 0.3 parts by mass of n-butanol was added after checking that an isocyanate value was 0.1% or less, and a reaction was further performed for 2 hours, and then, cooling was performed to 50°C, and thus, an organic solvent solution of a prepolymer was obtained.

Further, 320 parts by mass of water was added and sufficiently stirred, and thus, a water dispersion element of a polymer (A2-2) was obtained, and then, aging-desolvation was performed, and therefore, a polymer composition (1-2) having a non-volatile content of 20% by mass, containing the polymer (A2-2), was obtained.

(Synthesis Example 4: Synthesis of Polymer (A3-1))

A reaction was performed in a mixed solvent of 100 parts by mass of polyoxytetramethylene glycol (a molecular weight of 2000), 6.6 parts by mass of isophorone diisocyanate, 8.4 parts by mass of a 2,2-dimethylol propionic acid, 4.0 parts by mass of neopentyl glycol, and 80 parts by mass of methyl ethyl ketone, in a nitrogen-substituted vessel provided with a thermometer, a nitrogen gas introduction pipe, and a stirrer.

Next, a part of all of the carboxyl groups in the reactant were neutralized by adding 7.3 parts by mass of triethyl amine, and 385 parts by mass of water was further added and sufficiently stirred, but a water dispersion element of a polymer (A3-1) was not capable of being obtained due to poor emulsification. The obtained reaction mixture was set to a polymer composition (1-3).

(Synthesis Example 5: Synthesis of Polymer (A1-1))

79 parts by mass of butadiene, 19 parts by mass of styrene, and 2 parts by mass of an acrylic acid were reacted with 0.5 parts by mass of ammonium persulfate (APS) in the condition of monomer batch emulsion polymerization (a reaction temperature of 60°C), by using 1 part by mass of Newcol 261A [manufactured by Nippon Nyukazai Co., LTd.], as an emulsifying agent, and 200 parts by mass of ion exchange water, and then, the removal of the unreacted monomer and concentration were performed, and thus, a polymer composition (II-1) having a solid content of 45%, containing a polymer (A1-1), was obtained.

(Synthesis Example 6: Synthesis of Polymer (A1-2))

49 parts by mass of butadiene, 49 parts by mass of styrene, and 2 parts by mass of an acrylic acid were reacted with 0.5 parts by mass of ammonium persulfate (APS) in the condition of monomer batch emulsion polymerization (a reaction temperature of 60°C), by using 1 part by mass of Newcol 261A [manufactured by Nippon Nyukazai Co., LTd.], as an emulsifying agent, and 200 parts by mass of ion exchange water, and then, the removal of the unreacted monomer and concentration were performed, and thus, a polymer composition (II-2) having a solid content of 45%, containing a polymer (A1-2), was obtained.

(Synthesis Example 7: Synthesis of Polymer (A1-3))

49 parts by mass of isoprene, 49 parts by mass of styrene, and 2 parts by mass of an acrylic acid were reacted with 0.5 parts by mass of ammonium persulfate (APS) in the condition of monomer batch emulsion polymerization (a reaction temperature of 60°C), by using 1 part by mass of Newcol 261A [manufactured by Nippon Nyukazai Co., LTd.], as an emulsifying agent, and 200 parts by mass of ion exchange water, and then, the removal of the unreacted monomer and concentration were performed, and thus, a polymer composition (II-3) having a solid content of 45%, containing a polymer (A1-3), was obtained.

(Synthesis Example 8: Synthesis of Polymer (A1-4))

79 parts by mass of isoprene, 19 parts by mass of acrylonitrile, and 2 parts by mass of an acrylic acid were reacted with 0.5 parts by mass of ammonium persulfate (APS) in the condition of monomer batch emulsion polymerization (a reaction temperature of 60°C), by using 1 part by mass of Newcol 261A [manufactured by Nippon Nyukazai Co., LTd.], as an emulsifying agent, and 200 parts by mass of ion exchange water, and then, the removal of the unreacted monomer and concentration were performed, and thus, a polymer composition (II-4) having a solid content of 45%,

containing a polymer (A1-4), was obtained.

(Example 1: Synthesis of Composite Resin (1))

146 parts by mass of ion exchange water was added to 288 parts by mass of the polymer composition (I-1) obtained in Synthesis Example 2, and 34 parts by mass of butadiene and 8.6 parts by mass of styrene were reacted with 0.5 parts by mass of ammonium persulfate (APS) in the condition of monomer batch emulsion polymerization (a reaction temperature of 70°C), and then, the removal of the unreacted monomer and concentration were performed, and thus, a polymer composition (III-1) having a solid content of 35%, containing a composite resin (1), was obtained.

(Example 2: Synthesis of Composite Resin (2))

146 parts by mass of ion exchange water was added to 288 parts by mass of the polymer composition (I-1) obtained in Synthesis Example 2, and 21.3 parts by mass of butadiene and 21.3 parts by mass of styrene were reacted with 0.5 parts by mass of ammonium persulfate (APS) in the condition of monomer batch emulsion polymerization (a reaction temperature of 70°C), and then, the removal of the unreacted monomer and concentration were performed, and thus, a polymer composition (III-2) having a solid content of 35%, containing a composite resin (2), was obtained.

(Example 3: Synthesis of Composite Resin (3))

146 parts by mass of ion exchange water was added to 288 parts by mass of the polymer composition (I-1) obtained in Synthesis Example 2, and 8.6 parts by mass of butadiene and 34 parts by mass of styrene were reacted with 0.5 parts by mass of ammonium persulfate (APS) in the condition of monomer batch emulsion polymerization (a reaction temperature of 70°C), and then, the removal of the unreacted monomer and concentration were performed, and thus, a polymer composition (III-3) having a solid content of 35%, containing a composite resin (3), was obtained.

(Example 4: Synthesis of Composite Resin (4))

23 parts by mass of ion exchange water was added to 420 parts by mass of the polymer composition (1-2) obtained in Synthesis Example 3, and 29 parts by mass of butadiene and 7 parts by mass of styrene were reacted with 0.5 parts by mass of ammonium persulfate (APS) in the condition of monomer batch emulsion polymerization (a reaction temperature of 70°C), and then, the removal of the unreacted monomer and concentration were performed, and thus, a polymer composition (III-4) having a solid content of 28%, containing a composite resin (4), was obtained.

(Example 5: Synthesis of Composite Resin (5))

146 parts by mass of ion exchange water was added to 288 parts by mass of the polymer composition (I-1) obtained in Synthesis Example 2, and 34 parts by mass of isoprene and 8.6 parts by mass of styrene were reacted with 0.5 parts by mass of ammonium persulfate (APS) in the condition of monomer batch emulsion polymerization (a reaction temperature of 70°C), and then, the removal of the unreacted monomer and concentration were performed, and thus, a polymer composition (III-5) having a solid content of 35%, containing a composite resin (5), was obtained.

(Example 6: Synthesis of Composite Resin (6))

146 parts by mass of ion exchange water was added to 288 parts by mass of the polymer composition (I-1) obtained in Synthesis Example 1, and 21.3 parts by mass of isoprene and 21.3 parts by mass of styrene were reacted with 0.5 parts by mass of ammonium persulfate (APS) in the condition of monomer batch emulsion polymerization (a reaction temperature of 60°C), and then, the removal of the unreacted monomer and concentration were performed, and thus, a polymer composition (III-6) having a solid content of 35%, containing a composite resin (6), was obtained.

(Example 7: Synthesis of Composite Resin (7))

146 parts by mass of ion exchange water was added to 288 parts by mass of the polymer composition (I-1) obtained in Synthesis Example 1, and 21.3 parts by mass of butadiene and 21.3 parts by mass of acrylonitrile were reacted with 0.5 parts by mass of ammonium persulfate (APS) in the condition of monomer batch emulsion polymerization (a reaction temperature of 60°C), and then, the removal of the unreacted monomer and concentration were performed, and thus, a polymer composition (III-7) having a solid content of 35%, containing a composite resin (7), was obtained.

(Example 8: Synthesis of Composite Resin (8))

206 parts by mass of ion exchange water was added to 200 parts by mass of the polymer composition (I-1) obtained in Synthesis Example 1, and 57 parts by mass of butadiene and 13 parts by mass of styrene were reacted with 0.5 parts by mass of ammonium persulfate (APS) in the condition of monomer batch emulsion polymerization (a reaction temperature of 60°C), and then, the removal of the unreacted monomer and concentration were performed, and thus, a polymer composition (III-8) having a solid content of 35%, containing a composite resin (8), was obtained.

(Example 9: Synthesis of Composite Resin (9))

231 parts by mass of ion exchange water was added to 160 parts by mass of the polymer composition (I-1) obtained in Synthesis Example 1, and 68 parts by mass of isoprene and 16 parts by mass of styrene were reacted with 0.5 parts by mass of ammonium persulfate (APS) in the condition of monomer batch emulsion polymerization (a reaction temperature of 60°C), and then, the removal of the unreacted monomer and concentration were performed, and thus, a polymer composition (III-9) having a solid content of 35%, containing a composite resin (9), was obtained.

(Example 10: Synthesis of Composite Resin (10))

146 parts by mass of ion exchange water was added to 200 parts by mass of the polymer composition (I-1) obtained in Synthesis Example 1, and 21 parts by mass of butadiene, 6 parts by mass of styrene, and 3 parts by mass of N-methylol-acrylamide were reacted with 0.5 parts by mass of ammonium persulfate (APS) in the condition of monomer batch emulsion polymerization (a reaction temperature of 60°C), and then, the removal of the unreacted monomer and concentration were performed, and thus, a polymer composition (III-10) having a solid content of 35%, containing a composite resin (10), was obtained.

(Example 11: Synthesis of Composite Resin (11))

105 parts by mass of ion exchange water was added to 385.7 parts by mass of the polymer composition (I-1) obtained in Synthesis Example 1, and 12 parts by mass of isoprene and 3 parts by mass of styrene were reacted with 0.5 parts by mass of ammonium persulfate (APS) in the condition of monomer batch emulsion polymerization (a reaction temperature of 60°C), and then, the removal of the unreacted monomer and concentration were performed, and thus, a polymer composition (III-11) having a solid content of 35%, containing a composite resin (11), was obtained.

(Example 12: Synthesis of Composite Resin (12))

130 parts by mass of ion exchange water was added to 320 parts by mass of the polymer composition (I-1) obtained in Synthesis Example 1, and 22 parts by mass of butadiene and 6 parts by mass of styrene were reacted with 0.5 parts by mass of ammonium persulfate (APS) in the condition of monomer batch emulsion polymerization (a reaction temperature of 60°C), and then, the removal of the unreacted monomer and concentration were performed, and thus, a polymer composition (111-12) having a solid content of 35%, containing a composite resin (12), was obtained.

(Comparative Example 1: Polymer (A2-1))

The polymer composition (1-1) containing the polymer (A2-1) in Synthesis Example 2 was used.

(Comparative Example 2: Polymer (A2-2))

The polymer composition (1-2) containing the polymer (A2-2) in Synthesis Example 3 was used.

(Comparative Example 3: Polymer (A2-2))

146 parts by mass of ion exchange water was added to 288 parts by mass of the polymer composition (1-3) obtained in Synthesis Example 4, and 21.3 parts by mass of butadiene and 21.3 parts by mass of styrene were reacted with 0.5 parts by mass of ammonium persulfate (APS) in the condition of monomer batch emulsion polymerization (a reaction temperature of 70°C), but the polymer was not capable of being composited.

(Comparative Example 4: Polymer (A1-1))

The polymer composition (II-1) containing the polymer (A1-1) in Synthesis Example 5 was used.

(Comparative Example 5: Polymer (A1-2))

The polymer composition (II-2) containing the polymer (A1-2) in Synthesis Example 6 was used.

(Comparative Example 6: Polymer (A1-3))

The polymer composition (II-3) containing the polymer (A1-3) in Synthesis Example 7 was used.

(Comparative Example 7: Polymer (A1-4))

The polymer composition (II-4) containing the polymer (A1-4) in Synthesis Example 8 was used.

(Comparative Example 8: Blend of Polymer (A2-1) and Polymer (A1-3))

30 parts by mass of the polymer composition (11-3) obtained in Synthesis Example 6 was added to 200 parts by mass of the polymer composition (I-1) obtained in Synthesis Example 1, and was stirred for a given length of time, and thus, a blend product of the polymer (A2-1) and the polymer (A1-3), having a solid content of 37.5%, was obtained.

"Measurement of Film Physical Property": A coating film (a film thickness of 150 μm) was prepared on a PP film substrate, and a tensile test was performed by using the peeled film. The film was pulled at a tensile speed of 300 mm/minute, and an elongation rate and strength with respect to the own length at break, and tensile strength at elongation of 300% were measured.

"Solvent Resistance": A coating film (a film thickness of 150 μm) was prepared on a PP film substrate, and the peeled film was subjected to a durability test with respect to MEK.

Film Immersion: 1 Day (Normal Temperature)

Dissolution Rate: An elution rate was calculated by dividing an elution amount obtained by subtracting the weight after the film immersion (dried) from the weight before the film immersion, by the weight of the entire film.

"Water Resistance and Water Swellability": A coating film (a film thickness of 150 μm) was prepared on a PP film substrate, and the peeled film was subjected to a durability test with respect to water.

Film Immersion: 1 Day (Normal Temperature)

Dissolution Rate with respect to Water: An elution rate was calculated by dividing an elution amount obtained by subtracting the weight after the film immersion (dried) from the weight before the film immersion, by the weight of the entire film.

Swelling Rate: A swelling rate was calculated by dividing the swollen area obtained by subtracting the area before the film immersion from the area after the film immersion (dried), by the area of the film.

[Table 1]

| | | | Example | | | | | | | | | | | |
|---|---|---|---|---|---|---|---|---|---|---|---|---|---|---|
| | | | 1 | 2 | 3 | 4 | 5 | 6 | 7 | 8 | 9 | 10 | 11 | 12 |
| Degree of film elongation | Degree of breaking elongation | % | 710 | 700 | 650 | 1.7 | 700 | 700 | 710 | 800 | 840 | 660 | 630 | 660 |
| | Breaking strength | MPa | 33 | 36 | 38 | 18.6 | 32 | 34 | 35 | 23 | 20 | 36 | 42 | 38 |
| At elongation of 300% | Tensile strength | MPa | 4.1 | 4.5 | 4.8 | - | 3.8 | 4.2 | 4.4 | 3.2 | 2.8 | 4.7 | 5.7 | 4.9 |
| Solvent resistance | MEK elution rate | % by mass | 67 | 64 | 55 | 57 | 67 | 65 | 14 | 10 | 10 | 8 | 30 | 19 |
| Water resistance | Elution rate | % by mass | 0.4 | 0.4 | 0.3 | 0.3 | 0.4 | 0.4 | 0.4 | 0.3 | 0.3 | 0.3 | 0.6 | 0.5 |
| | Swelling rate | % by area | 100 | 100 | 100 | 100 | 100 | 100 | 100 | 100 | 100 | 100 | 100 | 100 |

| | | | Comparative Example | | | | | | | |
|---|---|---|---|---|---|---|---|---|---|---|
| | | | 1 | 2 | 3 | 4 | 5 | 6 | 7 | 8 |
| Degree of film elongation | Degree of breaking elongation | % | 610 | 10 | Synthesis unavailable | 250 | 600 | 630 | 900 | 700 |
| | Breaking strength | MPa | 47 | 38 | | 0.8 | 1.5 | 1.7 | 1.3 | 35 |
| At elongation of 300% | Tensile strength | MPa | 7.5 | - | | - | 0.9 | 1 | 0.7 | 5.7 |
| Solvent resistance | MEK Elution rate | % by mass | 97 | 96 | | 9 | 19 | 21 | 19 | 71 |
| Water resistance | Elution rate | % by mass | 1.1 | 0.8 | | 0.7 | 0.8 | 0.6 | 0.7 | 0.4 |
| | Swelling rate | % by area | 107 | 103 | | 102 | 107 | 104 | 107 | 121 |

In Examples 1 to 12 that are the examples of the invention, balance in solvent resistance, water resistance, flexibility, stretchability, and strength of a film to be obtained was excellent. In Comparative Examples 1 and 2, the polymer (A1) unit was not provided, in Comparative Examples 3 and 8, the polymer (A1) unit and the polymer (A2) unit were not composited, and in Comparative Examples 4 to 7, the polymer (A2) unit was not provided, a film was not capable of being prepared, or balance in solvent resistance, water resistance, flexibility, stretchability, and strength of a film to be obtained was poor.

## Claims

**1.** An aqueous resin composition, containing:

a composite resin (A); and
an aqueous medium (B),
wherein the composite resin (A) has a polymer (A1) unit having a unit represented by Formula (1) and a polymer (A2) unit represented by Formula (3),

[Chem. 1]

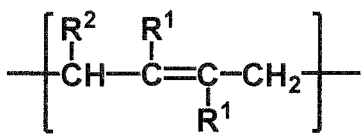

(1)

in which in Formula (1),
$R^1$s each represent a hydrogen atom, a halogen atom, a phenyl group, or a methyl group, and two $R^1$s may be in a cis position or a trans position,
$R^2$ represents a hydrogen atom or a hydrocarbon group having 1 to 5 carbon atoms, and
a plurality of $R^1$s may be identical to each other or different from each other, and

[Chem. 2]

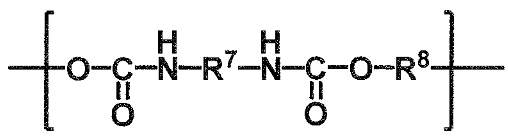

(3)

in which in Formula (3),
$R^7$ represents a m1-valent hydrocarbon group having 1 to 20 carbon atoms, $-CH_2-$ in the hydrocarbon group may be substituted with -NCN-, and a hydrogen atom in the hydrocarbon group may be substituted with $-COOR^9$,
$R^9$ represents a hydrogen atom or an alkyl group having 1 to 5 carbon atoms,
$R^8$s each represent one type selected from the group consisting of $R^{10}[-L^1-(R^{11}-O-)_{n1}]_{n2}-$; $-O(-R^{11}-CO-O)_{n3}-$; $-O(-R^{11}-O-CO-R^{11}-CO-O)_{n4}-$; $-O(-R^{11}-O-CO-O)_{n5}-$; $-O(-R^{12})_{n6}-O-$; $-O-R^{11}-O-$; and a group obtained by combining two or more types of such groups from which -O- on a terminal is excluded, through -O-, and by adding -O- to a terminal,
$R^{10}$ represents a n2-valent hydrocarbon group having 1 to 20 carbon atoms, -N<, or -PO<, $-CH_2-$ in the hydrocarbon group may be substituted with -O-, -CO-, or -NH-, and a hydrogen atom in the hydrocarbon group may be substituted with a hydrophilic group,
$R^{11}$s each represent a hydrocarbon group having 1 to 20 carbon atoms, $-CH_2-$ in the hydrocarbon group may be substituted with -O-, and a hydrogen atom in the hydrocarbon group may be substituted with a hydrophilic group,
$R^{12}$ represents an alkenediyl group having 4 to 10 carbon atoms, and a hydrogen atom in the alkenediyl group may be substituted with a halogen atom or a hydrophilic group,
$L^1$s each represent one type selected from the group consisting of -O-, -S-, -NH-, -COO-, -OCO-, and $-R^{13}-O-$,
$R^{13}$ represents an alkylene group having 1 to 5 carbon atoms,
in a case in which two or more $R^7$s to $R^{13}$s and $L^1$s are present, two or more $R^7$s to $R^{13}$s and $L^1$s may be

identical to each other or different from each other, and
m1 and n1 to n6 each represent an integer of 2 or more.

2. The aqueous resin composition according to claim 1, wherein a content ratio of the polymer (A1) unit is 0.1% by mass or more and 90% by mass or less, in the composite resin (A) .

3. The aqueous resin composition according to claim 1 or 2, wherein $R^1$s are each a hydrogen atom or a methyl group.

4. A film to be formed of the aqueous resin composition according to any one of claims 1 to 3.

5. A method for producing a composite resin, comprising:

polymerizing a vinyl compound in the presence of a polymer (A2) having a unit represented by Formula (3), wherein the vinyl compound includes a compound represented by Formula (11),

[Chem. 3]

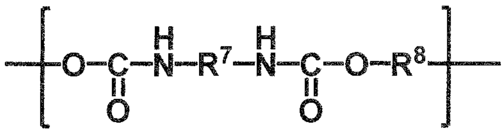

(3)

in which in Formula (3),
$R^7$ represents a m1-valent hydrocarbon group having 1 to 20 carbon atoms, $-CH_2-$ in the hydrocarbon group may be substituted with -NCN-, and a hydrogen atom in the hydrocarbon group may be substituted with $-COOR^9$,
$R^9$ represents a hydrogen atom or an alkyl group having 1 to 5 carbon atoms,
$R^8$s each represent one type selected from the group consisting of $R^{10}[-L^1-(R^{11}-O-)_{n1}]_{n2}-$; $-O(-R^{11}-CO-O)_{n3}-$; $-O(-R^{11}-O-CO-R^{11}-CO-O)_{n4}-$; $-O(-R^{11}-O-CO-O)_{n5}-$; $-O(-R^{12})_{n6}-O-$; $-O-R^{11}-O-$; and a group obtained by combining two or more types of such groups from which -O- on a terminal is excluded, through -O-, and by adding -O- to a terminal,
$R^{10}$ represents a n2-valent hydrocarbon group having 1 to 20 carbon atoms, -N<, or -PO<, $-CH_2-$ in the hydrocarbon group may be substituted with -O-, -CO-, or -NH-, and a hydrogen atom in the hydrocarbon group may be substituted with a hydrophilic group,
$R^{11}$s each independently represent a hydrocarbon group having 1 to 20 carbon atoms, $-CH_2-$ in the hydrocarbon group may be substituted with -O-, and a hydrogen atom in the hydrocarbon group may be substituted with a hydrophilic group,
$R^{12}$ represents an alkenediyl group having 4 to 10 carbon atoms, and a hydrogen atom in the alkenediyl group may be substituted with a halogen atom or a hydrophilic group,
$L^1$s each represent one type selected from the group consisting of -O-, -S-, -NH-, -COO-, -OCO-, and $-R^{13}-O-$,
$R^{13}$ represents an alkylene group having 1 to 5 carbon atoms,
in a case in which two or more $R^7$s to $R^{13}$s and $L^1$s are present, $R^7$s to $R^{13}$s and $L^1$s may be identical to each other or different from each other, and
m1 and n1 to n6 each independently represent an integer of 2 or more, and

[Chem. 4]

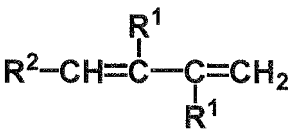

(11)

in which in Formula (11),
$R^1$s each represent a hydrogen atom, a halogen atom, a phenyl group, or a methyl group,

$R^2$ represents a hydrogen atom or a hydrocarbon group having 1 to 5 carbon atoms, and
a plurality of $R^1$s may be identical to each other or different from each other.

**6.** The production method according to claim 5,
wherein the polymer (A2) is obtained by a reaction between a compound represented by Formula (13) and a compound represented by Formula (14), and a molar ratio (NCO/OH) of -NCO in the compound represented by Formula (13) to -OH in the compound represented by Formula (14) is 0.3 or more and 5.0 or less,
[Chem. 5]

$$\mathbf{R^7\text{-(-NCO)}_{m1}} \qquad \mathbf{(13)}$$

in which in Formula (13),

$R^7$ is as described above, and
m1 represents an integer of 2 or more, and

[Chem. 6]

$$\mathbf{R^8\text{-(-OH)}_{n7}} \qquad \mathbf{(14)}$$

in which in Formula (14),
$R^8$ is as described above, and
n7 represents an integer of 2 or more.

**INTERNATIONAL SEARCH REPORT**

International application No. PCT/JP2019/018511

A. CLASSIFICATION OF SUBJECT MATTER

Int.Cl. C08L75/14(2006.01)i, C08F283/00(2006.01)i, C08G18/00(2006.01)i, C08G18/42(2006.01)i, C08G18/48(2006.01)i, C08J5/18(2006.01)i, C09D109/00(2006.01)i, C09D175/04(2006.01)i

According to International Patent Classification (IPC) or to both national classification and IPC

B. FIELDS SEARCHED

Minimum documentation searched (classification system followed by classification symbols)

Int.Cl. C08L75/14, C08F283/00, C08G18/00, C08G18/42, C08G18/48, C08J5/18, C09D109/00, C09D175/04

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X | JP 2016-531169 A (BASF COATINGS GMBH) 06 October 2016, claims, paragraphs [0010], [0019]-[0080], [0103]-[0121], examples & US 2016/0152862 A1, entire text & WO 2015/007427 A1 & EP 3022242 A1 & KR 10-2016-0031540 A | 1-6 |

☒ Further documents are listed in the continuation of Box C.

☐ See patent family annex.

* Special categories of cited documents:

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 31.07.2019 | 13.08.2019 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

015)

**INTERNATIONAL SEARCH REPORT**

International application No.
PCT/JP2019/018511

C (Continuation). DOCUMENTS CONSIDERED TO BE RELEVANT

| Category* | Citation of document, with indication, where appropriate, of the relevant passages | Relevant to claim No. |
|---|---|---|
| X<br>A | COUVERCELLE, J. P. et al., Synthesis, dispersion and properties of hydroxy polybutadiene-based anionic polyurethane-urea, Macromolecular Symposia, 2000, 151, 347-352, DOI: 10.1002/1521-3900(200002)151:1<347::AID-MASY347>3.0.CO;2-T | 1-4<br>5, 6 |
| X<br>A | AKRAM, N. et al., Influence of polyol molecular weight and type on the tack and peel properties of waterborne polyurethane pressure-sensitive adhesives, Macromolecular Reaction Engineering, 2013, 7, 493-503, DOI: 10.1002/mren.201300109 | 1, 3, 4<br>2, 5, 6 |
| A | JP 6-250388 A (TOYO INK MFG CO., LTD.) 09 September 1994, entire text<br>(Family: none) | 1-6 |
| A | JP 4-089808 A (TOYO INK MFG CO., LTD.) 24 March 1992, entire text<br>(Family: none) | 1-6 |
| A | JP 2013-056966 A (DIC CORP.) 28 March 2013, entire text<br>& CN 102994036 A & TW 201311844 A | 1-6 |
| A | XIA, N. N. et al., Self-healing of polymer in acidic water toward strength restoration through the synergistic effect of hydrophilic and hydrophobic interactions, ACS Applied Materials & Interfaces, 2017, 9, 37300-37309 | 1-6 |
| A | JP 2011-514405 A (DOW GLOBAL TECHNOLOGIES LLC) 06 May 2011, entire text<br>& US 2012/0028064 A1, entire text & WO 2009/099717 A2 & EP 2240522 A2 & CN 101970510 A | 1-6 |
| A | JP 11-255845 A (NIPPON OIL & FATS CO., LTD.) 21 September 1999, entire text<br>(Family: none) | 1-6 |

Form PCT/ISA/210 (continuation of second sheet) (January 2015)

INTERNATIONAL SEARCH REPORT

International application No.
PCT/JP2019/018511

C (Continuation). DOCUMENTS CONSIDERED TO BE RELEVANT

| Category* | Citation of document, with indication, where appropriate, of the relevant passages | Relevant to claim No. |
|---|---|---|
| A | JP 11-209455 A (NICCA CHEMICAL CO., LTD.) 03 August 1999, entire text (Family: none) | 1-6 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6199968 A
- JP 2004231852 A